# FASCICULE DE BREVET EUROPEEN

(11) **EP 3 218 141 B1**
(45) Date de publication et mention de la délivrance du brevet: **10.04.2019**
(21) Numéro de dépôt: 15807950.9
(22) Date de dépôt: 04.11.2015
(51) Int. Cl.: B23K 20/12, B23K 26/34, F01D 5/00, F01D 5/30, B23K 101/00, B23K 103/08, B23K 26/342

(54) **PROCÉDÉ DE SOUDAGE PAR FRICTION AVEC RECHARGEMENT D'UNE PALE SUR UNE AUBE DE TURBOMACHINE**
VERFAHREN ZUM REIBSCHWEISSEN EINES BLATTS AN EINE TURBOMASCHINENSCHAUFEL, EINSCHLIESSLICH EINES FLÄCHENBEARBEITUNGSVERFAHRENS
METHOD FOR FRICTION-WELDING A BLADE TO A TURBOMACHINE VANE, INCLUDING A SURFACING PROCESS

(30) Priorité: 14.11.2014 FR 1461037
(43) Date de publication de la demande: 20.09.2017
(73) Titulaire: Safran Aircraft Engines, 75015 Paris (FR)
(72) Inventeur: MOTTIN, Jean-Baptiste, 77550 Moissy-Cramayel (FR); VASSAULT, Marc, Jacky, 77550 Moissy Cramayel Cedex (FR)
(74) Mandataire: Pichat, Thierry
(86) Numéro de dépôt international: PCT/FR2015/052983
(87) Numéro de publication internationale: WO 2016/075391

(56) Documents cités:
- DE-A1-102004 043 746
- DE-A1-102009 033 835
- DE-A1-102013 226 221
- JP-A- 2009 039 746
- US-A1- 2007 071 608

## Description

La présente invention concerne un procédé de soudage par friction d'une pale sur un disque de rotor d'une turbomachine telle qu'un turboréacteur ou un turbopropulseur d'avion voir; le préambule de la revendication 1 et voir par exemple, DE10 2009 043 184 A1.

Un disque aubagé monobloc (DAM) de turbomachine est un disque de rotor qui comporte à sa périphérie externe une rangée annulaire d'aubes sensiblement radiales, qui sont d'une seule pièce avec le disque. Ce type de disque peut être obtenu par soudage par friction de pales sur un disque portant des plots en saillie, l'extrémité radialement interne de chaque pale étant soudée à un plot du disque.

Dans le cas où au moins une aube du disque est détériorée et doit être remplacée, elle est retirée, par exemple par usinage, de sorte qu'un plot de matière (correspondant à la partie d'extrémité radialement interne de l'aube usinée) reste à la périphérie du disque pour le soudage d'une pale neuve.

Dans la demande antérieure WO 2014/083275, il est proposé, pour réparer un disque aubagé monobloc, de recourir à un soudage par friction de la pale sur le disque de rotor, le disque comportant (en périphérie externe) un plot en saillie sur une surface externe duquel la pale est destinée à être soudée.

Plus spécifiquement, il est prévu dans ce procédé :
- une étape consistant à monter des taquets sur des bords d'attaque et de fuite du plot, chaque taquet comportant un évidement dans lequel est engagé le bord d'attaque ou de fuite du plot et dont la forme est sensiblement complémentaire de celle de ce bord,
- avant le soudage par friction, de solidariser les taquets au plot par soudage, et
- que, pendant l'opération de soudage par friction, les cordons de soudure entre les taquets et le plot soient au moins en partie expulsés dans des bourrelets de matière qui se forment autour de la zone de liaison de la pale au plot et qui sont destinés à être retirés ou supprimés, par exemple par usinage.

Pour intéressante qu'elle soit, cette technique peut trouver ses limites quand, en particulier sur les DAM, il existe une forte variation de section entre le maître couple et le Bord d'Attaque (BA) ou le Bord de Fuite (BF), pouvant se traduire par des variations d'épaisseur d'un rapport de plus de 15, voire plus de 18.

De plus, il peut se trouver qu'au surplus l'épaisseur des bords de fuite et bord d'attaque sur ces pièces est faible (inférieure à 2mm, voire à 1,5mm).

Du fait de la géométrie des pièces, les aspects thermiques peuvent en outre devenir critique, car la pression de soudage par unité de surface est plus importante en BA et BF et entraine des zones affectées thermiquement (ZAT) plus importantes, en surface ou volume.

De tels facteurs peuvent engendrer lors de l'assemblage par friction des déformations localisées au BA et BF.

La forte variation précitée de section peut également être la source d'une hétérogénéité dans la microstructure de l'assemblage soudé.

Un but de la présente invention est au moins de limiter ces inconvénients, voire de les surmonter.

Une solution proposée à cette fin est un procédé de soudage par friction d'une pale avec un disque de rotor d'une turbomachine, le disque de rotor comportant un plot en saillie sur une surface externe duquel la pale est destinée à être soudée, le procédé comprenant des étapes où on effectue un rechargement sur une partie au moins du pourtour du plot, vers ladite surface externe, ce procédé étant en outre caractérisé par les étapes suivantes :
- on usine la surface externe (180) du plot et le rechargement, pour les mettre de niveau, et obtenir une surface de soudage (26) agrandie, de sorte que le plot (18) s'élève alors sur le disque de rotor (10') le long d'une direction prédéterminée (10a), suivant une première hauteur (H3),
- on soude par friction la surface externe du plot rechargé et la pale (12'), de sorte que le plot (18) s'élève alors sur le disque de rotor (10') le long de ladite direction prédéterminée (10a), suivant une deuxième hauteur (H4), inférieure à la première hauteur (H3), et
- dans une direction perpendiculaire à la surface externe (180) du plot et/ou parallèle à ladite direction prédéterminée (10a), on effectue le rechargement suivant une hauteur (H1) inférieure à la différence (H2) de hauteurs entre les première (H3) et deuxième (H4) hauteurs.

En pratique, la précision du rechargement sera a priori essentielle afin de garantir un assemblage final avec une métallurgie souhaitée. Ainsi, l'opération d'usinage devra favorablement permettre de garantir une planéité pleinement cohérente avec les besoins du procédé de soudage par friction.

Dans ce cadre, il est conseillé que l'étape d'usinage comprenne la réalisation d'une planéité inférieure à 0.5mm et de préférence inférieure à 0.1mm entre la surface externe du plot et le rechargement.

Lors du soudage par friction, la zone fondue liée au rechargement, donc une partie de la matière apportée par ce rechargement, va être expulsée dans du « flash » ; en effet, le courant électrique, confiné en des points de contact très localisés, va provoquer un étincelage (flash) répété et une expulsion de métal fondu.

Comme la hauteur du rechargement sera inférieure à la valeur de la consommation matière coté plot, on évitera qu'un résidu de zone fondue soit présent dans l'assemblage final et ait pour conséquence d'affaiblir la liaison métallurgique et d'entrainer des abattements mécaniques non négligeables.

Afin de minimiser la taille de la zone affectée thermiquement (ZAT, zone proche de la zone de liaison où la structure de trempe est plus marquée qu'ailleurs) et les contraintes résiduelles liées au rechargement, on privilégiera par ailleurs :
- un rechargement par une fusion de type soudage ou laser,
- et/ou un rechargement par soudage CMT (soudage à l'arc en court-circuit), ou par déposition par laser.

Afin de tenir compte au mieux de la géométrie du plot et de la pale à y souder, en particulier eu égard à la forte variation de section entre le maître couple et le Bord d'Attaque (BA) ou le Bord de Fuite (BF), et à l'épaisseur de ces bords de fuite et d'attaque qui peut donc être inférieure à 2mm, voire à 1,5mm, il sera par ailleurs a priori préférable que l'étape de soudage comprenne un soudage par friction linéaire.

Par ailleurs, on profitera avantageusement de ladite surface de soudage agrandie (surfaces usinées du plot et du rechargement) pour, entre les étapes d'usinage et de soudage, placer la pale contre ladite surface de soudage agrandie, ce placement étant effectué via l'interface d'une ébauche de la pale qui empiètera sur le rechargement usiné.

Cette invention sera si nécessaire mieux comprise et d'autres détails, caractéristiques et avantages de l'invention pourront apparaître à la lecture de la description suivante faite à titre d'exemple non limitatif en référence aux dessins annexés dans lesquels :
- la figure 1 est une vue schématique partielle en perspective d'un disque aubagé monobloc de turbomachine ;
- la figure 2 est une vue schématique partielle en perspective du disque de la figure 1 après usinage (découpe) de certaines de ses aubes, en vue de leur remplacement ; et

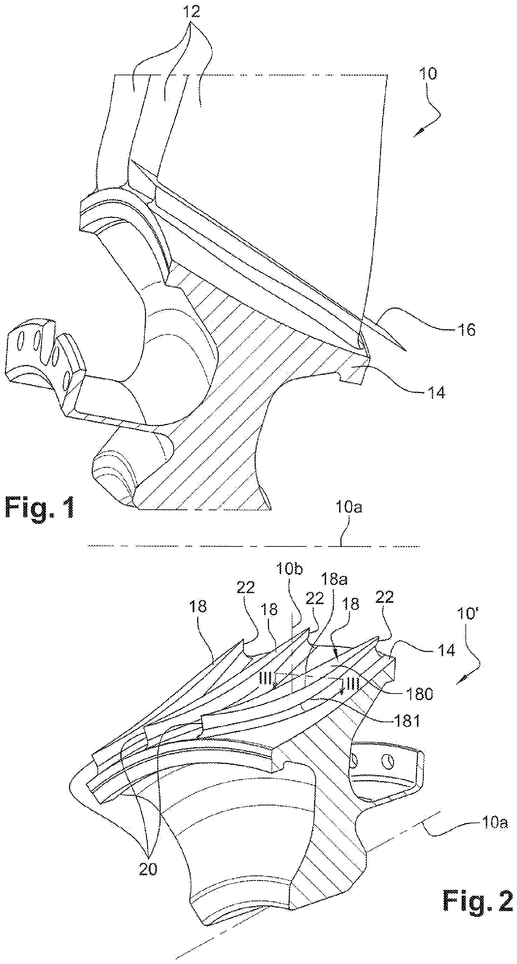

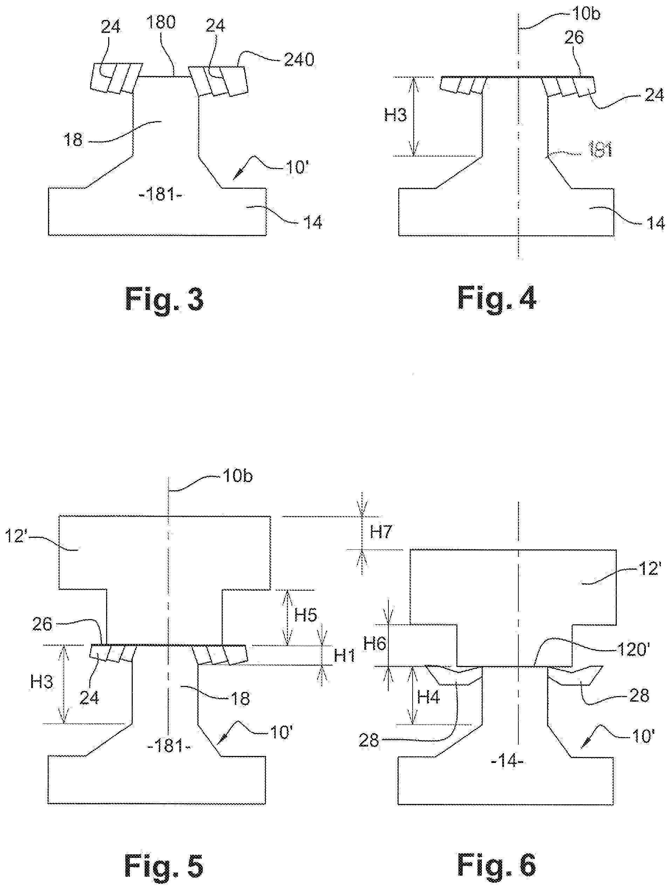

- les figures 3 à 6 sont des vues schématiques partielles conformes à l'invention, en coupe suivant la ligne III-III, d'un des plots de la figure 2, où la figure 3 figure la situation à la fin du rechargement, la figure 4 figure la situation à la fin de l'usinage de la surface externe dudit plot et du rechargement, pour les mettre de niveau, la figure 5 figure la situation au début du soudage par friction, après qu'une ébauche de la pale à mettre en place a été apportée sur le plot, et la figure 6 figure la situation vers la fin de ce soudage, alors que de l'étincelage expulse encore de la matière.

Bien que de façon générale l'invention s'applique à la fabrication, en particulier la réparation, d'aubages par un procédé additif associé à un soudage par friction, la figure 1 présente donc une application privilégiée de la solution proposée en vue de la réparation d'un disque aubagé monobloc 10 (DAM), compte tenu de ce qui a déjà été expliqué.

Est ainsi illustrée une partie d'un disque aubagé monobloc 10 (DAM) d'une turbomachine qui est prévu pour être monté tournant autour d'un axe de rotation 10a. Ainsi, ce qui « axial » est ici à considérer comme orienté (sensiblement) suivant, ou parallèlement à l'axe 10a, et ce qui est « radial » comme orienté (sensiblement) perpendiculairement, ou radialement à l'axe 10a. En outre, est radialement interne ce qui est plus proche de l'axe 10a que ce qui est radialement externe.

Le disque 10 porte une rangée annulaire d'aubes ou pales12 sensiblement radiales qui sont d'une seule pièce (monoblocs) avec le disque. Les aubes 12 sont reliées par leurs extrémités radialement internes à une plate-forme annulaire 14 qui s'étend à la périphérie externe du disque.

En cas de détérioration des aubes ou pales 12, il est possible de les retirer par usinage en vue de leur remplacement. La référence 16 désigne un plan de coupe d'une aube 12 destinée à être remplacée. Ce plan de coupe, qui définit la surface (radialement) externe 180, s'étend sensiblement parallèlement et à distance de la surface annulaire externe de la plate-forme 14.

La distance entre la plate-forme 14 et le plan de coupe 16 est déterminée pour qu'un plot 18 de matière (correspondant à la partie radialement interne de l'aube s'étendant entre la plate-forme 14 et le plan de coupe 16) reste sur la plate-forme 14 pour servir de support à la fixation soudée par friction d'une nouvelle pale d'aube.

La figure 2 représente un disque de rotor 10' portant vers sa périphérie une rangée annulaire de plots 18 du type précité. Ainsi, chaque plot 18 fait donc saillie de la plate-forme 14, à sa périphérie externe. Et le plan de joint/de découpe 16 est positionné radialement au-delà du rayon de raccordement pale / plate-forme du disque.

Le disque 10' peut être obtenu par usinage et retrait des aubes d'un disque aubagé monobloc 10 en vue de la réparation de ce disque, comme expliqué ci-avant. En alternative, le disque 10' pourrait être obtenu directement, par exemple de fonderie, en vue de la fabrication d'un disque aubagé monobloc. Dans ce dernier cas, les plots seraient réalisés lors de la fabrication du disque et seraient chacun destinés à recevoir une pale d'aube.

Comme cela est visible en figure 2, chaque plot présente un bord d'attaque 20 et un bord de fuite 22 reliés entre eux par un intrados et un extrados.

Une pale (non représentée) est à fixer sur chaque plot 18 du disque par soudage par friction, potentiellement linéaire ou orbitale.

Pour éviter les problèmes décrits ci-dessus liés à la variation importante de la dimension transversale du plot 18 entre son maître couple et ses bords d'attaque 20 et de fuite 22, en évitant de recourir aux taquets évoqués dans WO 2014/083275, il est ici proposé de venir réaliser un rechargement du plot 18, à l'endroit du plan de coupe 16, suite au retrait de l'aube correspondante.

Ainsi voit-on schématiquement figure 3 que le plot 18 du disque 10' illustré a été rechargé, en 24, sur une partie au moins du pourtour 18a du plot, vers la surface (radialement) externe 180 de ce plot.

Préalablement, le disque 10', et en particulier le plot a été préparé ; la zone 180 à souder a été décapée et dégraissée, en vue de ce rechargement.

La matière apportée par ce rechargement est le même métal, ou alliage, que celui du plot, ou une matière physico chimiquement compatible avec elle pour que les deux parties se soudent ensemble.

A cette étape, le rechargement 24 a amené la surface externe 180 à présenter un état de surface irrégulier, avec des surépaisseurs là où le rechargement a été conduit, c'est-à-dire en particulier sur le pourtour 18a de la zone découpée du plot, comme illustré figure 3.

La surface externe 180 du plot et le rechargement 24 sont alors usinés, pour les mettre de niveau, comme schématisé figure 4. En résulte une surface de soudage 26 plus importante, donc agrandie par rapport à la seule surface 180 du plot.

Afin d'uniformiser les efforts appliqués entre les deux éléments (plot et pale) durant le soudage par friction et d'homogénéiser les gradients thermiques dans la pièce, il est recommandé que l'étape d'usinage comprenne la réalisation d'une planéité de la surface (usinée) de soudage 26 inférieure à 0.5mm, et de préférence inférieure à 0.1mm, entre donc la surface externe initiale 26 du plot et la surface externe initiale 240 du rechargement (voir figure 3).

L'usinage peut comprendre une rectification ou prévoir l'utilisation d'un outil coupant.

Les figures montrent que la hauteur H1 du rechargement 24 est conformément à la présente invention, inférieure à la hauteur, dite H2, de matière du plot 18 consommée lors du soudage par friction, avec H2=H3-H4.

Ainsi :
- si l'on considère qu'avant soudage, mais après usinage (figure 4), le plot 18 s'élève, sur la plate-forme 14 du disque, radialement (axe 10b figures 4,5) suivant une première hauteur H3 (jusqu'à la surface 26),
- puis suivant une deuxième hauteur H4 (jusqu'à l'interface avec la pale de remplacement 12'), inférieure à la hauteur H3, après le soudage par friction (figure 6),
- alors, dans une direction perpendiculaire à la surface externe 180 du plot et/ou parallèle à ladite direction radiale 10b, on effectuera le rechargement conformément à l'invention suivant une hauteur H1 inférieure à la différence de hauteurs H3-H4 (=H2).

Pour effectuer le rechargement suivant cette hauteur H2 qui tient compte desdites hauteurs H3, H4, on pourra recourir à des résultats de tests ou d'essais antérieurs, conduits lors d'une phase de mise au point et enregistrés dans des abaques ou une mémoire d'ordinateur.

A noter que l'on définira identiquement les deux bases de référence pour les hauteurs H3 et H4, à savoir par exemple la base du plot 18 considéré, à partir, et radialement vers l'extérieur au-delà, de là où il s'évase vers l'intérieur en 181, pour son raccordement à la plate-forme 14 du disque.

La zone rechargée 24 permettra de renforcer la pièce finie au BA et BF et d'homogénéiser l'épaisseur de la zone à souder.

Figures 5,6, on a par ailleurs noté H5 et H6 respectivement les hauteurs, perpendiculairement à la surface externe 180 et/ou parallèlement à la direction radiale 10b, suivant lesquelles s'élève la pale de remplacement 12', typiquement sur sa partie radialement interne à partir de son interface 120' avec la surface 26 et dont une partie va être consommée lors du soudage par friction. D'ailleurs, on voit figure 6 qu'a été noté H7 le cumul des hauteurs (H5 + H6) de matières du plot et de la pale consommées lors du soudage par friction (perpendiculairement à la surface externe 180 et/ou parallèlement à la direction 10b).

Pour le rechargement, on privilégiera un procédé par une fusion de type soudage ou laser.

Et, afin de minimiser la dimension, en volume, de la zone (ZAT) affectée thermiquement (par le rechargement et/ou le soudage) et les contraintes résiduelles liées au rechargement, on préférera donc des procédés de type CMT (Metal Inert Gas Cold Metal Transfer),ou LMD (Laser Metal Déposition).

Comme connu, le soudage CMT est un procédé de soudage à l'arc électrique mais, comparé aux procédés MIG/MAG, le fil subit des mouvements de va-et-vient. De ce fait, le transfert de matière a lieu à courant électrique réduit (presque nul), et donc la matière déposée est plus « froide ». De préférence, le soudage CMT se fait exclusivement avec des sources de courant Inverter (à variateur de fréquences) entièrement numériques. Il s'agit d'un procédé de soudage à l'arc en court-circuit avec détachement des gouttes du fil de soudage.

Quant à la technique de la déposition par laser, elle est connue sous différents noms, parmi lesquels: la déposition par laser [Laser Metal Déposition (LMD)], la déposition directe métal [Direct Metal Déposition (DMD)], la déposition directe par laser [Direct Laser Déposition (DLD)], la mise en forme par laser [Laser Engineered Net Shaping (LENS)], le revêtement par dépôt laser [laser cladding], le soudage par dépôt laser et le soudage par fusion de poudre. Le procédé comporte l'utilisation d'un faisceau laser servant à former un bain de fusion sur un substrat métallique, dans lequel la poudre est introduite. La poudre fond, en formant un dépôt adhérant par fusion au substrat.

Ayant donc défini de préférence une hauteur H1 de rechargement 24 (inférieure à H2) qui convient, et établi la planéité attendue de la surface usinée de soudage 26, une nouvelle pale 12' va donc être placée avec son interface 120' contre ladite surface (radialement) externe 26, comme schématisé figure 5.

On pourra avantageusement profiter des surface usinées du plot et du rechargement qui ont créées ladite surface 26 de soudage agrandie pour alors, avant le soudage qui va suivre, placer la pale 12' contre cette surface de soudage agrandie, ce placement étant effectué via l'interface d'une ébauche de la pale qui empiètera sur le rechargement usiné (sa surface usinée), comme on le voit notamment figure 5.

L'empiétement existera au moins latéralement en largeur là où le plot coupé présente sa plus grande largeur (voir figures). Typiquement, il peut s'agir de la zone située à sa mi-longueur, ou proche de celle-ci, comme illustré figure 1 (coupe III-III).

Le soudage par friction desdits deux éléments compatibles va pouvoir commencer.

Compte tenu des formes prévues des surfaces 180 et 26, il est recommandé que ce soudage par friction soit linéaire, même si une solution orbitale ou autre est possible.

Parmi les avantages, on peut alors noter une économie de matière, la possibilité d'utiliser des matériaux ou fibrage différents entre les pales et le (la plate-forme du) disque et la possibilité de souder des pales creuses.

Les plots 18 et pales 12' pourront être réalisés en Ti17.

Pour l'étape de soudage, la pale 12' ne sera avantageusement encore qu'une ébauche, un brut de la nouvelle pale, comme le schématise le bloc illustré figures 5,6. Les deux éléments au contact seront assemblés à l'état pâteux par friction, ceci permettant un assemblage sans abattement mécanique. Ce n'est alors qu'après soudage que l'ébauche de la pale sera façonné, typiquement usiné, pour donner à la pale sa forme définitive.

Figure 6, on voit en 28 que de l'étincelage expulse encore de la matière, de sorte que les hauteurs H4 et H6 diminuent encore.

La Zone Fondue (ZF) liée au rechargement sera expulsée dans du flash. C'est pourquoi il sera favorable que la hauteur H1 soit inférieure à la valeur de la consommation matière coté plot (H2). Autrement, un résidu de ZF sera présent dans l'assemblage final et aura pour conséquence d'affaiblir la liaison métallurgique et d'entrainer des abattements mécaniques potentiellement non négligeables.

On notera encore que la ZAT provenant de l'opération de rechargement sera transformée durant l'opération de soudage par friction. Les gros grains de la ZAT seront affinés et retrouveront une taille similaire au matériau forgé.

Pour finir, les pièces soudées subissent habituellement des contrôles non destructifs, des opérations de traitement thermique, ainsi que des phases d'usinage afin de restaurer la géométrie à la pièce soudée ; en l'espèce la forme finale de la pale. Un grenaillage peut également être réalisé en fonction des besoins.

Finalement, on obtiendra donc un nouveau disque de rotor, ici le disque aubagé monobloc de turbomachine attendu.

## Revendications

1. Procédé de soudage par friction d'une pale (12') avec un disque de rotor (10') d'une turbomachine, le disque de rotor (10') comportant un plot (18) en saillie sur une surface externe duquel la pale est destinée à être soudée, le procédé comprenant des étapes où on effectue un rechargement (24) sur une partie au moins du pourtour du plot, vers ladite surface externe,
et **caractérisé par** les étapes suivantes :
- on usine la surface externe (180) du plot et le rechargement, pour les mettre de niveau, et obtenir une surface de soudage (26) agrandie, de sorte que le plot (18) s'élève alors sur le disque de rotor (10') le long d'une direction prédéterminée (10a), suivant une première hauteur (H3),
- on soude par friction la surface externe du plot rechargé et la pale (12'), de sorte que le plot (18) s'élève alors sur le disque de rotor (10') le long de ladite direction prédéterminée (10a), suivant une deuxième hauteur (H4), inférieure à la première hauteur (H3), et
- dans une direction perpendiculaire à la surface externe (180) du plot et/ou parallèle à ladite direction prédéterminée (10a), on effectue le rechargement suivant une hauteur (H1) inférieure à la différence (H2) de hauteurs entre les première (H3) et deuxième (H4) hauteurs.

2. Procédé selon la revendication 1, dans lequel l'étape d'usinage comprend la réalisation d'une planéité inférieure à 0.5mm et de préférence inférieure à 0.1mm entre la surface externe du plot et le rechargement.

3. Procédé selon la revendication 1 ou 2, dans lequel l'étape de rechargement comprend un rechargement (24) par une fusion de type soudage ou laser.

4. Procédé selon l'une des revendications précédentes, dans lequel l'étape de rechargement comprend un rechargement (24) par soudage CMT ou par déposition par laser.

5. Procédé selon l'une des revendications précédentes, dans lequel l'étape de soudage comprend un soudage par friction linéaire.

6. Procédé selon l'une des revendications précédentes dans lequel, entre les étapes d'usinage et de soudage, et par une interface (120') d'une ébauche de la pale (12') qui empiète sur le rechargement usiné, on place la pale (12') contre ladite surface de soudage (26) agrandie.

## Patentansprüche

1. Verfahren zum Reibschweißen einer Schaufel (12') mit einer Rotorscheibe (10') einer Turbomaschine, wobei die Rotorscheibe (10') einen vorspringenden Klotz (18) aufweist, an dessen Außenfläche die Schaufel angeschweißt werden soll, wobei das Verfahren die folgenden Schritte umfasst:
1. - Ausführen einer Auftragsschweißung (24) an zumindest einem Teil des Umfangs des Klotzes zur Außenfläche hin,
**gekennzeichnet durch** die folgenden Schritte:
- spanendes Bearbeiten der Außenfläche (180) des Klotzes und der Auftragsschweißung, um sie auf Niveau zu bringen und um eine vergrößerte Schweißfläche (26) zu erhalten, derart, dass der Klotz (18) an der Rotorscheibe (10') entlang einer vorbestimmten Richtung (10a) auf eine erste Höhe (H3) ansteigt,
- Reibschweißen der Außenfläche des auftragsgeschweißten Klotzes und der Schaufel (12'), derart, dass der Klotz (18) an der Rotorscheibe (10') entlang der vorbestimmten Richtung (10a) auf eine zweite Höhe (H4) ansteigt, die geringer als die erste Höhe (H3) ist, und
- Ausführen der Auftragsschweißung auf eine Höhe (H1), die geringer als die Höhendifferenz (H2) zwischen der ersten (H3) und der zweiten Höhe (H4) ist, in einer Richtung senkrecht zu der Außenfläche (180) des Klotzes und/oder parallel zu der vorbestimmten Richtung (10a).

2. Verfahren nach Anspruch 1, wobei der Schritt des spanenden Bearbeitens das Herstellen einer Ebenheit von unter 0,5 mm, vorzugsweise unter 0,1 mm, zwischen der Außenfläche des Klotzes und der Auftragsschweißung umfasst.

3. Verfahren nach Anspruch 1 oder 2, wobei der Schritt des Auftragsschweißens eine Auftragsschweißung (24) mittels Aufschmelzen durch Schweißen oder Laser umfasst.

4. Verfahren nach einem der vorangehenden Ansprüche, wobei der Schritt des Auftragsschweißens eine Auftragsschweißung (24) durch CMT-Schweißen oder Laserdeposition umfasst.

5. Verfahren nach einem der vorangehenden Ansprüche, wobei der Schritt des Schweißens ein Linearreibschweißen umfasst.

6. Verfahren nach einem der vorangehenden Ansprüche, wobei zwischen den Schritten des spanenden Bearbeitens und des Schweißens die Schaufel (12') über eine Grenzfläche (120') eines Rohlings der Schaufel (12'), die auf die bearbeitete Auftragsschweißung eingreift, an die vergrößerte Schweißfläche (26) positioniert wird.

## Claims

1. A method for friction-welding a blade (12') to a rotor disk (10') of a turbomachine, with the rotor disk (10')comprising a projecting block (18) having an outer surface to which the blade is to be welded, the method comprising the following steps:
- a surfacing process (24) is carried out on at least a part of the periphery of the block, in the region of said outer surface,
and **characterized by** the following steps:
- the outer surface (18) of the block and of the surfacing (24) are machined, in order to put them at the same level so as to obtain an enlarged welding surface (26), such that the block (18) is then positioned on the rotor disk (10') in a predetermined direction (10a), along a first height (H3),
- friction-welding is then carried out between the surfaced outer surface of the block and the blade (12'), such that the block (18) is then positioned on the rotor disk (10') in a predetermined direction (10a), along a second height (H4), smaller than said first height (H3, and
- in a direction perpendicular to the outer surface (180) of the block and/or parallel to said predetermined direction (10a), the surfacing process is performed along a height (H1) smaller than the difference (H2) between the first height (H3) and the second height (H4).

2. A method according to claim 1, wherein the step of machining comprises making a flatness of less than 0.5mm and preferably of less than 0.1mm between the outer surface of the block and the surfaced surface.

3. A method according to claim 1 or 2, wherein the step of surfacing comprises a fusion surfacing (24) by welding or through a laser.

4. A method according to one of the preceding claims, wherein the step of surfacing comprises a surfacing (24) by CMT or by laser deposition welding.

5. A method according to one of the preceding claims, wherein the step of welding comprises a linear friction-welding.

6. A method according to one of the preceding claims, wherein, between the steps of machining and welding, and via an interface (120') of a preform of the blade (12') which overlaps the machined surfaced surface, the blade (12') is positioned against said enlarged welding surface (26).
